# EUROPÄISCHE PATENTANMELDUNG

(11) **EP 3 989 409 A1**
(43) Veröffentlichungstag der Anmeldung: **27.04.2022**
(21) Anmeldenummer: 21202784.1
(22) Anmeldetag: 15.10.2021
(51) Int. Cl.: H02K 3/52, H02K 3/51, H02K 19/12, H02K 3/487

(54) **ROTOR FÜR EINE ELEKTRISCHE MASCHINE, ELEKTRISCHE MASCHINE ZUM ANTREIBEN EINES FAHRZEUGS UND FAHRZEUG**

(30) Priorität: 23.10.2020 DE 102020127930
(71) Anmelder: Valeo Siemens eAutomotive Germany GmbH, 91056 Erlangen (DE)
(72) Erfinder: Dotz, Boris, 97616 Bad Neustadt a.d.Saale (DE); Bach, Regina, 97616 Bad Neustadt a.d.Saale (DE)

(57) **Zusammenfassung**

Rotor (1) für eine elektrische Maschine (101), aufweisend
― einen Rotorkern (2) mit einer Vielzahl von sich radial nach außen erstreckenden Rotorschenkeln (3);
― eine der Anzahl der Rotorschenkel (3) entsprechende Anzahl von Erregerwicklungen (5), die jeweils um einen der Rotorschenkel (3) gewickelt sind; und
― eine Trennvorrichtung (7), aufweisend
― eine der Anzahl der Rotorschenkel (3) entsprechende Anzahl von Trennabschnitten (8), die zwischen einem jeweiligen Paar benachbarter Erregerwicklungen (5) angeordnet sind und sich axial zwischen zwei gegenüberliegenden Stirnseiten (9, 10) des Rotors (1) erstrecken,
― einen ersten ringförmigen Verbindungsabschnitt (11), der die Trennabschnitte (8) an einer der Stirnseiten (9) miteinander verbindet, und
― einen zweiten ringförmigen Verbindungsabschnitt (12), der die Trennabschnitte (8) der anderen der Stirnseiten (10) miteinander verbindet;

wobei die Trennvorrichtung (7) durch einen ersten Teil (13) und durch einen zweiten Teil (14) ausgebildet ist, die mittels einer formschlüssigen und/oder kraftschlüssigen Verbindung (15) aneinander gefügt sind, wobei der erste Teil (13) zumindest den ersten Verbindungsabschnitt (11) und zumindest teilweise die Trennabschnitte (8) umfasst und der zweite Teil (14) zumindest den zweiten Verbindungsabschnitt (12) umfasst.

## Beschreibung

Die vorliegende Erfindung betrifft einen Rotor für eine elektrische Maschine. Daneben betrifft die Erfindung eine elektrische Maschine zum Antreiben eines Fahrzeugs und ein Fahrzeug.

Die DE 10 2004 062 162 A1 offenbart eine elektrische Maschine mit einem Schenkelpolläufer mit Erregerwicklungen, wobei in Pollücken Polwicklungsstützen und Verdrängungskörper vorhanden sind. Der Verdrängungskörper ist an den Polwicklungsstützen angeordnet und in axialer Richtung in mehrere axiale Abschnitte unterteilt.

Bei Rotoren mit Rotorschenkeln, die von Erregerwicklungen umwickelt sind, dienen zwischen benachbarten Rotorschenkeln angeordnete Trennabschnitte einer Trennvorrichtung einerseits zur elektrischen Isolierung der Erregerwicklungen und andererseits zu deren Formerhaltung während eines rotatorischen Betriebs. Dabei wirken auch erhebliche Radialkräfte, insbesondere Fliehkräfte, auf stirnseitige Enden der Erregerwicklungen, die sogenannten Wickelköpfe. Zur mechanischen Stabilisierung gegenüber solchen Radialkräften wurde bereits ein Vollverguss des Rotors vorgeschlagen, was teurer und aufwendig ist. Die alternative Verwendung zusätzlicher Bauteile, wie Armierungsringe und Befestigungen mittels Zugankern oder Schrauben, ist teuer oder kompliziert zu montieren.

Der Erfindung liegt die Aufgabe zugrunde, eine verbesserte Möglichkeit zur Stabilisierung eines Rotors während seines Betriebs anzugeben.

Diese Aufgabe wird erfindungsgemäß gelöst durch einen Rotor für eine elektrische Maschine, aufweisend einen Rotorkern mit einer Vielzahl von sich radial nach außen erstreckenden Rotorschenkeln; eine der Anzahl der Rotorschenkel entsprechende Anzahl von Erregerwicklungen, die jeweils um einen der Rotorschenkel gewickelt sind; und eine Trennvorrichtung, aufweisend eine der Anzahl der Rotorschenkel entsprechende Anzahl von Trennabschnitten, die zwischen einem jeweiligen Paar benachbarter Erregerwicklungen angeordnet sind und sich axial zwischen zwei gegenüberliegenden Stirnseiten des Rotors erstrecken, einen ersten ringförmigen Verbindungsabschnitt, der die Trennabschnitte an einer der Stirnseiten miteinander verbindet, und einen zweiten ringförmigen Verbindungsabschnitt, der die Trennabschnitte der anderen der Stirnseiten miteinander verbindet; wobei die Trennvorrichtung durch einen ersten Teil und durch einen zweiten Teil ausgebildet ist, die mittels einer formschlüssigen und/oder kraftschlüssigen Verbindung aneinander gefügt sind, wobei der erste Teil zumindest den ersten Verbindungsabschnitt und zumindest teilweise die Trennabschnitte umfasst und der zweite Teil zumindest den zweiten Verbindungsabschnitt umfasst.

Die Erfindung beruht auf der Überlegung, zumindest den ersten ringförmigen Verbindungsabschnitt und die Trennabschnitte zumindest teilweise funktional in einen ersten Teil der Trennvorrichtung zu integrieren, und diesen formschlüssig und/oder kraftschlüssig mit dem zweiten Teil der Trennvorrichtung, der zumindest den zweiten Verbindungsabschnitt umfasst, zu verbinden. Die den ersten Teil und den zweiten Teil der Trennvorrichtung aneinander fügende Verbindung kann dabei an einer geeigneten Stelle entlang der axialen Erstreckung der Trennvorrichtung bzw. des Rotors vorgesehen sein. Dies ermöglicht es, den ersten Teil axial in Zwischenräume zwischen den Rotorschenkeln einzuführen und dann an geeigneter Stelle mit dem zweiten Teil, insbesondere lösbar, zu verbinden. Der erste Teil realisiert auf diese Weise sowohl eine Formerhaltung der Erregerwicklung als auch eine mechanische Abstützung gegen Radialkräfte, die auf Wickelköpfe der Erregerwicklung wirken.

Wegen dieser mechanischen Stabilisierung kann die Funktion des Rotors bzw. der ihn aufweisenden elektrischen Maschine auch bei hohen mechanischen Belastungen, insbesondere bei hohen Drehzahlen, gewährleistet werden. Der erfindungsgemäße Rotor ist fertigungsfreundlich, da bei der erfindungsgemäß vorgesehenen Trennvorrichtung mehrere Funktionen in ein Bauteil integriert sind und eine einfache Handhabung ermöglicht wird, was Fertigungsminuten einspart. Gleichzeitig ermöglicht der erfindungsgemäße Rotor eine Minimierung einer Wicklungsaufweitung.

Der Rotorkern des erfindungsgemäßen Rotors kann durch eine Vielzahl von axial geschichteten und drehfest miteinander verbundenen Einzelblechen ausgebildet sein. Der Rotorkern kann dementsprechend auch als Blechpaket bezeichnet werden. Vorzugsweise weist das Blechpaket eine axiale Durchgangsöffnung auf, in der insbesondere eine Welle des Rotors angeordnet ist. Ein jeweiliger mit einer Erregerwicklung umwickelter Rotorschenkel kann einen Pol des Rotors ausbilden. Es wird besonders bevorzugt, wenn jeder Rotorschenkel radial außen einen Polschuh aufweist. Der Polschuh kann sich in Umfangsrichtung weiter erstrecken, als solche Bereiche des Rotorschenkels, die mit der Erregerwicklung umwickelt sind. In bevorzugter Ausgestaltung weist der erfindungsgemäße Rotor wenigstens zwei, bevorzugt wenigstens vier, besonders bevorzugt wenigstens acht Rotorschenkel und/oder höchstens 20, bevorzugt höchstens 16, besonders bevorzugt höchstens zwölf, Rotorschenkel auf. Es wird besonders bevorzugt, wenn der Rotor genau acht Rotorschenkel aufweist.

Es wird bei dem erfindungsgemäßen Rotor bevorzugt, wenn ein jeweiliger Trennabschnitt in axialer Richtung in einen ersten Teiltrennabschnitt, und in einen zweiten Teiltrennabschnitt aufgeteilt ist, wobei der erste Teil der Trennvorrichtung den ersten Teiltrennabschnitt eines jeweiligen Trennabschnitts umfasst und der zweite Teil der Trennvorrichtung den zweiten Teiltrennabschnitt eines jeweiligen Trennabschnitts umfasst. In diesem Fall umfasst auch der zweite Teil der Trennvorrichtung teilweise einen jeweiligen Trennabschnitt, sodass auch der zweite Teil eine Funktionsintegration von Verbindungsabschnitt und Trennabschnitt realisiert. Die Trennabschnitte sind mithin jeweils an einer vorgegebenen Axialposition aufgeteilt. Bevorzugt ist die Verbindung als eine solche, die die Teiltrennabschnitte eines jeweiligen Trennabschnitts aneinanderfügt, ausgebildet.

In Weiterbildung kann vorgesehen sein, dass jeder Teiltrennabschnitt ein stirnseitiges erstes Ende und ein dem ersten Ende axial gegenüberliegendes zweites Ende aufweist und die Verbindung zwischen dem ersten Teil der Trennvorrichtung und dem zweiten Teil der Trennvorrichtung durch die zweiten Enden der Teiltrennabschnitte eines jeweiligen Trennabschnitts ausgebildet ist. Die Verbindung wird somit vorzugsweise an den den Stirnseiten abgewandten zweiten Enden der Teiltrennabschnitte eines jeweiligen Trennabschnitts realisiert.

Zur Ausbildung der formschlüssigen und/oder kraftschlüssigen Verbindung greifen die zweiten Enden der Teiltrennabschnitte eines jeweiligen Trennabschnitts bevorzugt ineinander. Dies ermöglicht eine hohe Stabilität der Trennvorrichtung auch bei auf sie wirkenden Axialkräften.

Alternativ oder zusätzlich kann vorgesehen sein, dass das zweite Ende eines der Teiltrennabschnitte eines jeweiligen Trennabschnitts radial außen einen axialen ersten Vorsprung aufweist und das zweite Ende des anderen der Teiltrennabschnitte des jeweiligen Trennabschnitts radial innen ein axialen zweiten Vorsprung aufweist. Die Vorsprünge können dabei in einem vorgegebenen Axialbereich überlappen.

In Weiterbildung kann vorgesehen sein, dass der erste Vorsprung einen radial nach innen weisenden ersten Überstand aufweist und der zweite Vorsprung einen radial nach außen weisenden zweiten Überstand aufweist, der in den ersten Überstand eingreift. Die Überstände können mithin in einem vorgegebenen Radialbereich überlappen. Dabei wird es bevorzugt, wenn der erste Überstand axial weiter als der zweite Überstand ist.

Allgemein wird es bei dem erfindungsgemäßen Rotor bevorzugt, wenn die Verbindung durch eine Hackenstruktur bzw. ein Hackendesign realisiert ist.

Im Hinblick auf die Aufteilung der Trennabschnitte in Teiltrennabschnitte wird es bevorzugt, wenn der erste Teiltrennabschnitt und der zweite Teiltrennabschnitt eines jeweiligen Trennabschnitts sich jeweils über wenigstens 25 Prozent, bevorzugt wenigstens 35 Prozent, besonders bevorzugt wenigstens 45 Prozent, der axialen Erstreckung der Erregerwicklungen erstrecken. Es wird mithin eine im Wesentlichen axialen mittige Aufteilung in die Teiltrennabschnitte bevorzugt, sodass diese von einer jeweiligen Stirnseite, insbesondere mit dem zweiten Ende voran, zwischen die Erregerwicklung geführt werden können, um an einer im Wesentlichen mittigen Axialposition die Verbindung auszubilden.

Ein besonders hoher Integrationsgrad kann erreicht werden, wenn der erste Teil der Trennvorrichtung einstückig und/oder materialidentisch ausgebildet ist. Alternativ oder zusätzlich kann der zweite Teil der Trennvorrichtung einstückig und/oder materialidentisch ausgebildet sein. Ein jeweiliger Teil ist dabei bevorzugt aus Kunststoff gebildet, insbesondere als Formgussteil.

Insbesondere weisen bei dem erfindungsgemäßen Rotor die Trennabschnitte von den Stirnseiten aus gesehen eine keilförmige Grundfläche auf, wobei bevorzugt eine Spitze der Grundfläche radial nach innen weist. Die Trennabschnitte können von einer radialen Innenfläche des ringförmigen Verbindungsabschnitts radial nach innen weisen und dann insbesondere auch eine kreissektorförmige Grundfläche aufweisen. Außerdem erstrecken sich die Verbindungabschnitte bevorzugt radial weiter nach außen als die Trennabschnitte.

In vorteilhafter Weiterbildung des erfindungsgemäßen Rotors kann dieser ferner zwei Abschlussvorrichtungen aufweisen, die jeweils an einer der Stirnseiten am Rotorkern angeordnet sind und jeweils Abschlusselemente aufweist, die sich jeweils zwischen dem Rotorschenkel und der Erregerwicklung erstrecken. Die Abschlussvorrichtung ermöglicht insbesondere eine materialschonende Ausbildung der Wickelköpfe, da diese nicht direkt auf dem Rotorkern aufliegen müssen, sondern axial außen auf den Abschlusselementen. Die Abschlusselemente sind daher in mit der Erregerwicklung umwickelten Bereichen bevorzugt abgerundet ausgebildet.

Vorzugsweise umfasst die Abschlussvorrichtungen ferner einen ringförmigen Körper, der die Durchgangsöffnung des Rotorkerns umschließt und von dem sich die Abstandselemente radial nach außen erstrecken. Der ringförmige Körper kann sich axial weiter nach außen erstrecken als die Erregerwicklung.

In bevorzugter Ausgestaltung ist vorgesehen, dass die Verbindungsabschnitte der Trennvorrichtung radial außen auf den Abschlussvorrichtungen, insbesondere auf einem entlang der Umfangsrichtung ausgebildeten Absatz eines jeweiligen Abschlusselements, aufliegen. Dadurch wird eine satte Auflagefläche der Verbindungabschnitte auf der Abschlussvorrichtungen ausgebildet, um eine gute Abstützung gegen die Radialkräfte zu erzielen.

Die der Erfindung zugrunde liegende Aufgabe wird ferner gelöst durch eine elektrische Maschine zum Antreiben eines Fahrzeugs, aufweisend einen Stator und einen drehbar innerhalb des Stators gelagerten erfindungsgemäßen Rotor. Die elektrische Maschine ist bevorzugt als Elektromotor ausgebildet. Die elektrische Maschine ist vorzugsweise eine elektrisch erregte, insbesondere fremderregte, Synchronmaschine.

Die der Erfindung zugrunde liegende Aufgabe wird auch gelöst durch ein Fahrzeug, aufweisend eine erfindungsgemäße elektrische Maschine, wobei die elektrische Maschine zum Antreiben des Fahrzeugs eingerichtet ist. Es kann sich bei dem Fahrzeug beispielsweise um ein batterieelektrisches Fahrzeug (BEV) oder um ein Hybridfahrzeug handeln.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:
- Fig. 1: eine perspektivische Ansicht eines Ausführungsbeispiels des erfindungsgemäßen Rotors;
- Fig. 2: eine perspektivische geschnittene Ansicht des Rotors;
- Fig. 3: eine Detailansicht eines Ausschnitts III in Fig. 2 im Bereich der Verbindung zwischen dem ersten Teil und dem zweiten Teil der Trennvorrichtung des Rotors; und
- Fig. 4: eine Prinzipskizze eines Ausgangsbeispiels des erfindungsgemäßen Fahrzeugs mit einem Ausführungsbeispiel der erfindungsgemäßen elektrischen Maschine.

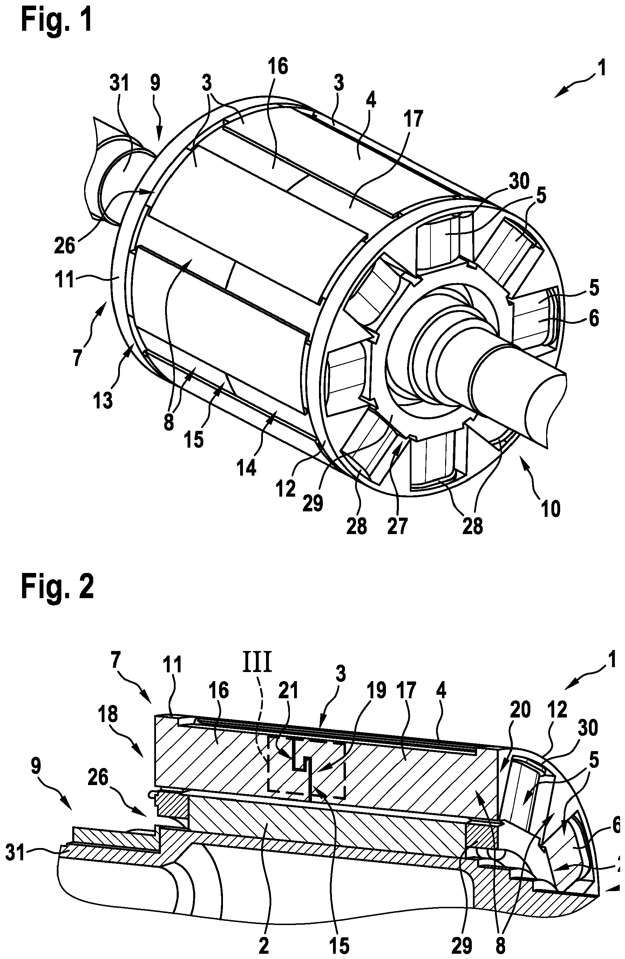

Fig. 1 und Fig. 2 zeigen jeweils ein Ausführungsbeispiel eines Rotors 1, wobei Fig. 1 eine perspektivische Ansicht und Fig. 2 eine perspektivische geschnittene Ansicht ist.

Der Rotor 1 weist einen Rotorkern 2 mit einer Vielzahl von sich radial nach außen erstreckenden Rotorschenkel 3 auf. Dabei können an radialen Enden der Rotorschenkel 3 Polschuhe 4 ausgebildet sein, welche den Rotorschenkel 3 in Umfangsrichtung beidseitig aufweiten. Der Rotorkern 2 kann als Blechpaket ausgebildet sein. Im vorliegenden Ausführungsbeispiel sind exemplarisch acht Rotorschenkel 3 vorgesehen.

Daneben weist der Rotor 1 eine der Anzahl der Rotorschenkel 3 entsprechende Anzahl von Erregerwicklung 5 auf, die jeweils um einen der Rotorschenkel 3 gewickelt sind. Axiale Enden der Erregerwicklungen 5 werden auch als Wickelköpfe 6 bezeichnet.

Außerdem weist der Rotor 1 eine Trennvorrichtung 7 auf. Die Trennvorrichtung 7 weist eine der Anzahl der Rotorschenkel 3 entsprechende Anzahl von Trennabschnitten 8 auf, die zwischen einem jeweiligen Paar benachbarter Erregerwicklungen 5 angeordnet sind und sich axial zwischen zwei gegenüberliegenden Stirnseiten 9, 10 des Rotors 1 erstrecken. Außerdem weist die Trennvorrichtung 7 einen ersten ringförmigen Verbindungsabschnitt 11, der die Trennabschnitte 8 an einer der Stirnseiten 9, 10, hier exemplarisch an der ersten Stirnseite 9, miteinander verbindet, und einen zweiten ringförmigen Verbindungsabschnitt 12, der die Trennabschnitte 8 an der anderen der Stirnseiten 9, 10, also hier an der zweiten Stirnseite 10, miteinander verbindet. Grundflächen der Trennabschnitte 8 können dabei, wie in Fig. 1 und Fig. 2 erkennbar, keilförmig mit radial nach innen weisender Spitze ausgebildet sein.

Die Trennvorrichtung 7 ist durch einen ersten Teil 13 und durch einen zweiten Teil 14 ausgebildet, die mittels einer formschlüssigen und/oder kraftschlüssigen Verbindung 15 aneinandergefügt sind. Die Verbindung 15 kann, wie hier exemplarisch dargestellt, durch eine Hackenstruktur bzw. ein Hackendesign ausgebildet sein. Der erste Teil 13 umfasst dabei den ersten Verbindungsabschnitt 11 und zumindest teilweise die Trennabschnitte 8. Der zweite Teil 14 umfasst zumindest den zweiten Verbindungsabschnitt 12 und exemplarisch bei dem vorliegenden Ausführungsbeispiel ebenfalls teilweise die Trennabschnitte 8.

Ein jeweiliger Trennabschnitt kann in axialer Richtung in einen ersten Teiltrennabschnitt, der zum ersten Teil 13 gehört, und in einen zweiten Teiltrennabschnitt 17, der zum zweiten Teil 14 gehört, aufgeteilt sein. Dabei können der erste Teiltrennabschnitt 16 ein stirnseitiges erstes Ende 18 und ein dem ersten Ende 18 axial gegenüberliegendes zweites Ende 19 und der zweite Teiltrennabschnitt 17 ein stirnseitiges erstes Ende 20 und ein dem ersten Ende 20 axial gegenüberliegendes zweites Ende 21 aufweisen.

Wie im vorliegenden Ausführungsbeispiel dargestellt können die Teile 13, 14 jeweils einstückig und materialidentisch ausgebildet sein. Dabei sind insbesondere der Verbindungsabschnitt 11, 12 sowie die Teiltrennabschnitte 16, 17 eines jeweiligen Teils 13, 14 einstückig und materialidentisch ausgebildet.

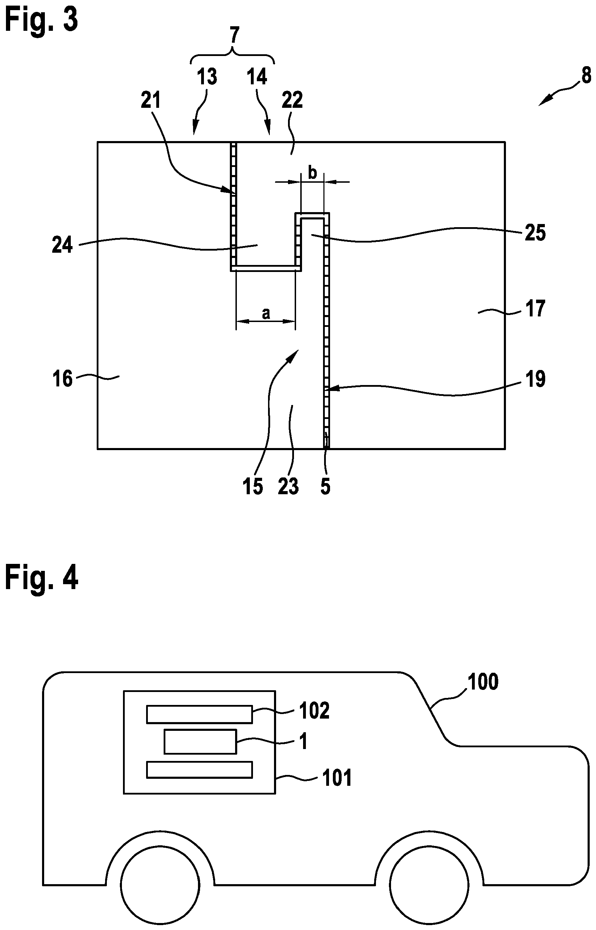

Fig. 3 ist eine Detailansicht eines Ausschnitts III in Fig. 2 eines der Trennabschnitte 8 im Bereich der Verbindung 15.

Die Verbindung 15 zwischen dem ersten Teil 13 und dem zweiten Teil 14 der Trennvorrichtung 7 kann durch die zweiten Enden 19, 21 der Teiltrennabschnitte 16, 17 eines jeweiligen Trennabschnitts 8 ausgebildet sein, wobei die zweiten Enden 19, 21 eines jeweiligen Trennabschnitts 8 vorzugsweise ineinandergreifen. Das zweite Ende 21 eines der Teiltrennabschnitte, hier des zweiten Teiltrennabschnitts 17, weist radial außen optional einen axialen ersten Vorsprung 22 auf, wohingegen das zweite Ende 19 des anderen Teiltrennabschnitts, also des ersten Teiltrennabschnitts 16, radial innen einen axialen zweiten Vorsprung 23 aufweisen kann. Der erste Vorsprung 22 kann wiederum einen radial nach innen weisenden ersten Überstand 24 aufweisen und der zweite Vorsprung 23 einen radial nach außen weisenden zweiten Überstand 25 aufweisen. Die Überstände 24, 25 hintergreifen sich gegenseitig. Im vorliegenden Ausführungsbeispiel ist eine axiale Länge a des ersten Überstands 24 weiter als eine axiale Länge b des zweiten Überstands 25, sodass der ersten Überstand 24 axial weiter als der zweite Überstand 25 ist.

Im vorliegenden Ausführungsbeispiel ist die Verbindung 15 im Wesentlichen an einer axialen Mittelposition des Rotorkerns 2 ausgebildet. Wegen der Vorsprünge 22, 23 erstrecken sich die Teiltrennabschnitte 16, 17 hier über mehr als 50 % der axialen Erstreckung der Erregerwicklungen 5. Eine Teilung zwischen dem ersten Teiltrennabschnitt 16 und dem zweiten Teiltrennabschnitt 17 kann jedoch auch an einer anderen Axialpositionen vorgesehen sein, so dass sich die Teiltrennabschnitte 16, 17 nur über wenigstens 25 Prozent, bevorzugt 35 Prozent, besonders bevorzugt wenigstens 45 Prozent der axialen Erstreckung der Erregerwicklungen 5 erstrecken können.

Wieder mit Bezug zu Fig. 1 und Fig. 2 weist der Rotor 1 optional zwei Abschlussvorrichtungen 26, 27 auf, die jeweils an einer der Stirnseiten 9, 10 am Rotorkerns 2 angeordnet sind und jeweils einer der Anzahl der Rotorschenkel 3 entsprechende Anzahl von Abschlusselementen 28 aufweisen. Diese erstrecken sich jeweils zwischen einem der Rotorschenkel 3 und der ihn umwickelnden Erregerwicklung 5. Die Abschlusselemente 28 können an einem ringförmigen Körper 29 einer jeweiligen Abschlussvorrichtungen 27, 26 angeordnet sein. Wie aus Fig. 1 und Fig. 2 ersichtlich können die Verbindungabschnitte 11, 12 der Trennvorrichtung 7 radial außen auf den Abschlussvorrichtungen 26, 27 aufliegen. Diese können dazu an einem jeweiligen Abschlusselement 28 einen entlang der Umfangsrichtung ausgebildeten Absatz 30 aufweisen.

Fig. 1 und Fig. 2 zeigen schließlich auch eine Welle 31 des Rotors 1, die mittels eines Presssitzes am Rotorkerns 2 befestigt ist und sich durch axiale Durchgangsöffnungen des Rotorkerns 2 und der Abschlussvorrichtungen 26, 27, insbesondere durch einen jeweiligen ringförmigen Körper 29, erstreckt.

Fig. 4 ist eine Prinzipskizze eines Ausführungsbeispiels eines Fahrzeugs 100, welches insbesondere als batterieelektrisches Fahrzeug (BEV) oder als Hybridfahrzeug ausgebildet ist. Zum Antreiben des Fahrzeugs 100 weist dieses ein Ausführungsbeispiel einer elektrischen Maschine 101 auf. Die elektrische Maschine 101 umfasst einen Stator 102 und einen innerhalb des Stators 102 drehbar gelagerten Rotor 1 gemäß dem zuvor beschriebenen Ausführungsbeispiel. Die elektrische Maschine 101 kann als Elektromotor und/oder als elektrisch erregte, insbesondere fremderregte, Synchronmaschine, ausgebildet sein.

## Patentansprüche

1. Rotor (1) für eine elektrische Maschine (101), aufweisend
- einen Rotorkern (2) mit einer Vielzahl von sich radial nach außen erstreckenden Rotorschenkeln (3);
- eine der Anzahl der Rotorschenkel (3) entsprechende Anzahl von Erregerwicklungen (5), die jeweils um einen der Rotorschenkel (3) gewickelt sind; und
- eine Trennvorrichtung (7), aufweisend
- eine der Anzahl der Rotorschenkel (3) entsprechende Anzahl von Trennabschnitten (8), die zwischen einem jeweiligen Paar benachbarter Erregerwicklungen (5) angeordnet sind und sich axial zwischen zwei gegenüberliegenden Stirnseiten (9, 10) des Rotors (1) erstrecken,
- einen ersten ringförmigen Verbindungsabschnitt (11), der die Trennabschnitte (8) an einer der Stirnseiten (9) miteinander verbindet, und
- einen zweiten ringförmigen Verbindungsabschnitt (12), der die Trennabschnitte (8) der anderen der Stirnseiten (10) miteinander verbindet;
wobei die Trennvorrichtung (7) durch einen ersten Teil (13) und durch einen zweiten Teil (14) ausgebildet ist, die mittels einer formschlüssigen und/oder kraftschlüssigen Verbindung (15) aneinander gefügt sind, wobei der erste Teil (13) zumindest den ersten Verbindungsabschnitt (11) und zumindest teilweise die Trennabschnitte (8) umfasst und der zweite Teil (14) zumindest den zweiten Verbindungsabschnitt (12) umfasst.

2. Rotor nach Anspruch 1, wobei
ein jeweiliger Trennabschnitt (8) in axialer Richtung in einen ersten Teiltrennabschnitt (16), und in einen zweiten Teiltrennabschnitt (17) aufgeteilt ist, wobei der erste Teil (13) der Trennvorrichtung (7) den ersten Teiltrennabschnitt (16) eines jeweiligen Trennabschnitts (8) umfasst und der zweite Teil (14) der Trennvorrichtung (7) den zweiten Teiltrennabschnitt (17) eines jeweiligen Trennabschnitts (8) umfasst.

3. Rotor nach Anspruch 2, wobei
jeder Teiltrennabschnitt (16, 17) ein stirnseitiges erstes Ende (18, 20) und ein dem ersten Ende (18, 20) axial gegenüberliegendes zweites Ende (19, 21) aufweist und die Verbindung (15) zwischen dem ersten Teil (13) der Trennvorrichtung (7) und dem zweiten Teil (14) der Trennvorrichtung (7) durch die zweiten Enden (19, 21) der Teiltrennabschnitte (16, 17) eines jeweiligen Trennabschnitts (8) ausgebildet ist.

4. Rotor nach Anspruch 3, wobei
die zweiten Enden (19, 21) der Teiltrennabschnitte (16, 17) eines jeweiligen Trennabschnitts (8) ineinandergreifen.

5. Rotor nach Anspruch 3 oder 4, wobei
das zweite Ende (21) eines der Teiltrennabschnitte (17) eines jeweiligen Trennabschnitts (8) radial außen einen axialen ersten Vorsprung (22) aufweist und das zweite Ende (19) des anderen der Teiltrennabschnitte (16) des jeweiligen Trennabschnitts (8) radial innen einen axialen zweiten Vorsprung (23) aufweist.

6. Rotor nach Anspruch 5, wobei
der erste Vorsprung (22) einen radial nach innen weisenden ersten Überstand (24) aufweist und der zweite Vorsprung (23) einen radial nach außen weisenden zweiten Überstand (25) aufweist, der in den ersten Überstand (24) eingreift.

7. Rotor nach Anspruch 6, wobei
der erste Überstand (24) axial weiter als der zweiter Überstand (25) ist.

8. Rotor nach einem der Ansprüche 2 bis 8, wobei
der erste Teiltrennabschnitt (16) und der zweite Teiltrennabschnitt (17) eines jeweiligen Trennabschnitts (8) sich jeweils über wenigstens 25 Prozent, bevorzugt wenigstens 35 Prozent, besonders bevorzugt wenigstens 45 Prozent, der axialen Erstreckung der Erregerwicklungen (5) erstrecken.

9. Rotor nach einem der vorhergehenden Ansprüche, wobei
die Verbindung (15) durch eine Hackenstruktur realisiert ist.

10. Rotor nach einem der vorhergehenden Ansprüche, wobei
- der erste Teil (13) der Trennvorrichtung (7) einstückig und/oder materialidentisch ausgebildet ist und/oder
- der zweite Teil (14) der Trennvorrichtung (7) einstückig und/oder materialidentisch ausgebildet ist.

11. Rotor nach einem der vorhergehenden Ansprüche, wobei
die Trennabschnitte (8) von den Stirnseiten (9, 10) aus gesehen eine keilförmige Grundfläche aufweisen.

12. Rotor nach einem der vorhergehenden Ansprüche, ferner aufweisend
zwei Abschlussvorrichtungen (26, 27), die jeweils an einer der Stirnseiten (9, 10) am Rotorkern (2) angeordnet sind und jeweils Abschlusselemente (28) aufweisen, die sich jeweils zwischen dem Rotorschenkel (3) und der Erregerwicklung (5) erstrecken.

13. Rotor nach Anspruch 12, wobei
die Verbindungsabschnitte (11, 12) der Trennvorrichtung (7) radial außen auf den Abschlussvorrichtungen (26, 27), insbesondere auf einem entlang der Umfangsrichtung ausgebildeten Absatz (30) eines jeweiligen Abschlusselements (28), aufliegen.

14. Elektrische Maschine (101) zum Antreiben eines Fahrzeugs (100), aufweisend einen Stator (102) und einen drehbar innerhalb des Stators (102) gelagerten Rotor (1) nach einem der vorhergehenden Ansprüche.

15. Fahrzeug (100), aufweisend eine elektrische Maschine (101) nach Anspruch 14, wobei die elektrische Maschine (101) zum Antreiben des Fahrzeugs (100) eingerichtet ist.
